# EUROPÄISCHE PATENTSCHRIFT

(11) **EP 2 412 282 B1**
(45) Veröffentlichungstag und Bekanntmachung des Hinweises auf die Patenterteilung: **20.03.2013**
(21) Anmeldenummer: 11005668.6
(22) Anmeldetag: 11.07.2011
(51) Int. Cl.: A47J 31/44

(54) **Kaffeezubereitungsgerät mit wenigstens einem Zubereitungsgutbehälter mit einer Füllstandsanzeige**
Coffee preparation device with at least one preparation material container with a fill level display
Appareil de préparation du café avec au moins un conteneur de préparation à affichage du niveau de remplissage

(30) Priorität: 28.07.2010 DE 202010010770 U
(43) Veröffentlichungstag der Anmeldung: 01.02.2012
(73) Patentinhaber: Eugster/Frismag AG, 8580 Amriswil (CH)
(72) Erfinder: Riessbeck, Wolfgang, 8597 Landschlacht (CH); Sanli, Hakan, 78467 Konstanz (DE)
(74) Vertreter: Schubert, Siegmar

(56) Entgegenhaltungen:
- EP-A2- 1 154 246
- DE-A1- 10 230 951
- DE-U1-202008 001 636
- DE-U1-202008 016 449
- DE-U1-202010 001 953

## Beschreibung

Die Erfindung betrifft ein Kaffeezubereitungsgerät mit wenigstens einem Zubereitungsgutbehälter, der wenigstens eine Behälterwand, insbesondere auf einer Behälterfrontseite, mit einer Füllstandsanzeige gemäß dem Oberbegriff des Anspruchs 1 aufweist.

Hochpreisige Kaffeezubereitungsgeräte sind in der Praxis zunehmend mit optoelektronischen Displays für Bedienungsmenüs und Zustandskontrollen des Kaffeezubereitungsgeräts einschließlich einer Füllstandsanzeige für einen Wasserbehälter und/oder Kaffeebehälter des Kaffeezubereitungsgeräts ausgestattet. Mit einem solchen optoelektronischen Display können eine instruktive Menüführung für die Bedienung des Kaffeezubereitungsgeräts und eine Darstellung von Informationen über das Gerät einschließlich dessen Füllständen realisiert werden. Hierfür ist jedoch der technische Aufwand für das optoelektronische Display und die mit ihm verbundenen elektronischen Komponenten, wie einem Mikrokontroller, und deren Programmierung relativ hoch. Insoweit auf den optoelektronischen Displays nicht nur Symbole, sondern auch Textinformationen angezeigt werden, ist mit einer weiteren Komplizierung zu rechnen, da für den Export Textinformationen in der jeweiligen Landessprache anzuzeigen sind. Schließlich erfordert das optische Display eine sorgfältige Beobachtung aus der Nähe.

Dem stehen einfachere, ebenfalls aus der Praxis bekannte Kaffeezubereitungsgeräte gegenüber, bei denen eine Füllstandsanzeige einfach durch unveränderliche Markierungen auf dem Wasserbehälter und/oder Kaffeebohnenbehälter ohne signifikante Signalwirkung erfolgt, so dass sie von einem Benutzer des Kaffeezubereitungsgeräts häufig nicht beachtet werden.

Um dem Benutzer eines Getränkezubereitungsgeräts eine Information so zu übermitteln, dass dieser die Information praktisch zwangsläufig wahrnimmt ist bereits ein Getränkezubereitungsgerät bekannt, an dessen Gehäuse oberhalb eines Fußes ein optisches Projektionssystem angeordnet ist, mit dem ein Symbol- oder Zeichenträger in Richtung auf eine Getränkeaufnahmeposition auf dem Fuß projiziert werden kann (DE 20 2007 008 590 U1). Dabei ist auch denkbar, das Projektionssystem mit Einstellmitteln auszustatten, um die projizierte Information zu verändern. Dieses Projektionssystem ist jedoch keinem Zubereitungsgutbehälter des Getränkezubereitungsgeräts zugeordnet und nicht als Füllstandsanzeige ausgebildet.

Eine bekannte Füllstandsanzeige für Flüssigkeiten in einem Behälter mit einer Anzeigeeinrichtung umfasst mehrere optische Anzeigeelemente, insbesondere lichtemittierende Dioden, die zu einer Kolonne an einer Behälterwand angeordnet sind (DE-A-102 30 951). Jede der Dioden weist einen Kontakt auf, der durch die Behälterwand in den Innenraum des Behälters hineinragt und eine Messelektrode bildet. Je nach Füllstand in dem Behälter kann ein Strom durch die Messelektroden fließen, so dass die Diodenanordnung entsprechend dem Füllstand aufleuchtet und den Füllstand anzeigt.

Eine weitere bekannte Füllstandsanzeige einer Kaffeemaschine weist ein lichtdurchlässiges Anzeigemittel in einem Flüssigkeitsbehälter einer Kaffeemaschine auf, welches als ein senkrechtes Rohr beispielsweise aus Acrylglas ausgebildet ist, das an seinem unteren Ende offen ist (EP-A-1 154 246). In dem Rohr steigt Flüssigkeit entsprechend dem Füllstand in dem Flüssigkeitsbehälter auf, wobei an der Grenzfläche zwischen Flüssigkeit und Luft ein Teil des in dem Rohr geführten Lichts seitlich nach außen reflektiert wird und der Füllstand damit angezeigt wird. Zur Unterstützung dieses optischen Effekts kann eine Lichtquelle vorgesehen sein, die optisch an das Anzeigemittel angekoppelt ist. Weiterhin kann zur Unterstützung des optischen Effekts in dem Rohr ein Schwimmkörper angeordnet sein, der einen großen Lichtanteil über seinen Seitenrand nach außen abgibt.

Weitere Füllstandsanzeigen auch für Kaffeemaschinen sind aus der DE-U-20 2008 016 449, DE-U-20 2008 001 636 und DE-U-20 2010 001 953 bekannt.

Der vorliegenden Erfindung liegt demgegenüber die Aufgabe zugrunde, für ein Kaffeezubereitungsgerät, insbesondere einer einfachen Bauart, eine technisch unkomplizierte Füllstandsanzeige für den Wasser- und/oder Kaffeebehälter mit großer Signalwirkung zu realisieren, die sich durch besonders niedrigen Fertigungsaufwand auszeichnet.

Zur Lösung dieser Aufgabe wird davon ausgegangen, dass wenigstens eine Behälterwand des Zubereitungsgutbehälters als Füllstandsanzeige mindestens einen füllstandsabhängig aktivierbaren Leuchtabschnitt aufweist.

Mit dem füllstandsabhängig aktivierbaren Leuchtabschnitt wird einem Benutzer des Kaffeezubereitungsgeräts ohne Weiteres deutlich erkennbar visualisiert, dass der Füllstand entweder in Ordnung ist oder korrigiert werden muss, indem Wasser oder Kaffeebohnen nachgefüllt werden. Durch die Ausbildung des füllstandsabhängig aktivierbaren Leuchtabschnitts als Bestandteil einer Behälterwand, insbesondere auf der Behälterfrontseite, ist die Zuordnung der Füllstandsanzeige zu dem jeweiligen Zubereitungsgutbehälter eindeutig und nicht fehlinterpretierbar. Darüber hinaus kann durch die Füllstandsanzeige in Form des aktivierbaren Leuchtabschnitts der Behälterwand, insbesondere auf der Behälterfrontseite, eine ästhetisch besonders ansprechende Füllstandsvisualisierung erzielt werden.

Die füllstandsabhängige Aktivierung des mindestens einen Leuchtabschnitts der Behälterwand, insbesondere auf der Behälterfrontseite, kann durch jeweils einen an oder in dem Zubereitungsgutbehälter angeordneten Füllstandssensor erfolgen, der als optoelektronischer Füllstandssensor oder magnetischer Füllstandssensor bzw -kontakt oder induktiver Füllstandssensor oder kapazitiver Füllstandssensor ausgebildet sein kann und benachbart zu dem, an dem oder in dem Zubereitungsgutbehälter angeordnet sein kann.

Wenngleich die füllstandsabhängig aktivierbaren Leuchtabschnitte der Füllstandsanzeige zur Füllstandsvisualisierung nicht notwendigerweise eine Textinformation zu deren Verständnis benötigen, können die Leuchtabschnitte optional zusätzlich Träger von Schrift- oder Symbolinformationen sein, um die Visualisierung zu erläutern und/oder zu Maßnahmen, insbesondere zu einem Auffüllen des zugeordneten Zubereitungsgutbehälters, aufzufordern.

In der erfindungsgemäßen Ausbildung des mindestens einen Leuchtabschnitts auf der wenigstens einen Behälterwand ist diese nach Anspruch 1 als eine dünnfilmige Leuchtdiode aus einem organischen halbleitenden Material ausgebildet, welches mit jeweils einer von dem Füllstandssensor des Kaffeezubereitungsgeräts gesteuerten Spannung beaufschlagt wird. Das organische, halbleitende Material wird auch als organische Leuchtdiode, abgekürzt OLED, bezeichnet. Die OLEDs können Farbstoffe enthalten, wobei die Farbe des bei elektrischer Anregung der OLEDs ausgesendeten Lichts von der Art der Farbstoffmoleküle abhängt. Die OLED lässt sich auf der Fläche des füllstandsabhängig aktivierbaren Leuchtabschnitts der Behälterwand durch Beschichtung oder Aufdruck kostengünstig aufbringen. Die OLED-Flächen können grundsätzlich analog zu Leuchtabschnitten aus einem lichtstreuenden transparenten Acrylglas angeordnet sein.

Bei dieser Ausbildung des mindestens einen Leuchtabschnitts auf wenigstens einer Behälterwand ist vorteilhaft, dass keine Lichtquelle zur Anregung der OLED erforderlich ist, sondern dass diese direkt durch Anlegen einer Spannung angeregt werden kann. Hierzu ist die Spannung dem Zubereitungsgutbehälter, der die OLED aufweist, über Kontakte aus dem Kaffeezubereitungsgerät zuzuführen.

Durch elektrische Ansteuerung einer OLED-Fläche bzw eines Leuchtabschnitts lässt sich die Farbe des abgestrahlten Lichts ändern. Die OLED-Fläche wird gemäß Anspruch 1 von dem Füllstandssensor aktiviert.

Den Füllstand mit OLEDs besonders sinnfällig visuallsierend ist eine Anordnung gemäß Anspruch 2, wonach die Frontseite des Zubereitungsgutbehälters drei gegeneinander versetzt übereinander angeordnete, voneinander elektrisch isolierte OLED-Flächen aufweist Dabei kann nach Anspruch 5 eine oberste OLED-Fläche von einem Füllstandssensor aktiviert werden, d.h. zum Leuchten angeregt werden, der einen vollen Zubereitungsgutbehälter erfasst, eine mittlere OLED-Fläche durch einen Füllstandssensor aktiviert werden, der einen halbvollen Zubereitungsgutbehälter erfasst, und eine untere der OLED-Flächen von einem Füllstandssensor aktiviert werden, der den Leerzustand des Zubereltungsgutbehälters erfasst.

Die Zuleitung der von jeweils einem Füllstandssensor gesteuerten Spannung zu der zugehörigen OLED-Fläche erfolgt nach Anspruch 3 über jeweils wenigstens einen an dem Zubereitungsgutbehälter angeordneten Kontakt, der mit je einem gerätefesten Stromeinspeisekontakt kontaktierbar ist, wobei an dem jeweils einen der Stromeinspeisekontakte eine durch den zugeordneten Füllstandssensor gesteuerte Spannung anliegt.

Die an dem Zubereitungsgutbehälter angeordneten Kontakte können weitgehend geschützt nach Anspruch 4 in einem auf die gerätefesten Stromeinspeisekontakte aufschiebbaren Steckerleiste kompakt integriert sein.

Statt einfacher OLED-Flächen, die nur als solche füllstandsabhängig aktivierbare Leuchtabschnitte zur Visualisierung des Füllstands eines Zubereitungsgutbehälters bilden, kann nach Anspruch 6 ein Leuchtabschnitt als OLED-Fläche mit einer Skala ausgebildet sein, die von mindestens einem Füllstandssensor gesteuert angeregt werden kann. Mit der füllstandsabhängig leuchtenden Skala kann der Füllstand exakt auffällig angezeigt werden.

Generell kann der Zubereitungsgutbehälter auch ein Kaffeebohnenbehälter des Kaffeezubereftungsgeräts sein. In diesem Fall ist die erfindungsgemäße Füllstandsvisualisierung wie bei einem Wasserbehälter anwendbar.

Ausführungsformen von Espressomaschinen mit Füllstandsanzeigen, von denen eine Ausführungsform diejenige gemäß der Erfindung ist, werden nachfolgend anhand einer Zeichnung mit sechs Figuren beschrieben, woraus sich weitere vorteilhafte Einzelheiten ergeben können. Es zeigen jeweils in vereinfachter schaubildlicher Darstellung:
- Fig. 1: eine erste Ausführungsform,
- Fig. 2: eine zweite Ausführungsform,
- Fig. 3: eine dritte Ausführungsform,
- Fig. 4: eine Ausführungsform der Erfindung,
- Fig. 5: eine weitere Ausführungsform und
- Fig. 6: noch eine weitere Ausführungsform.

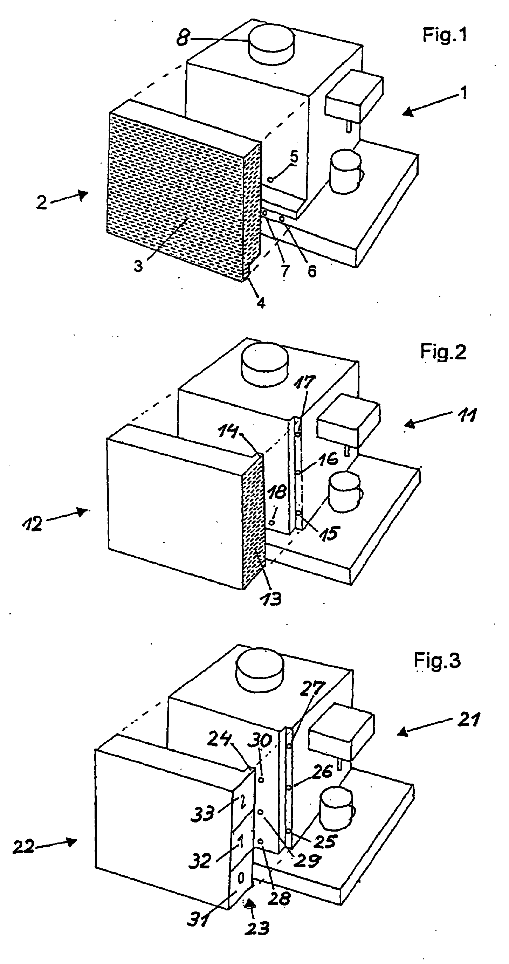

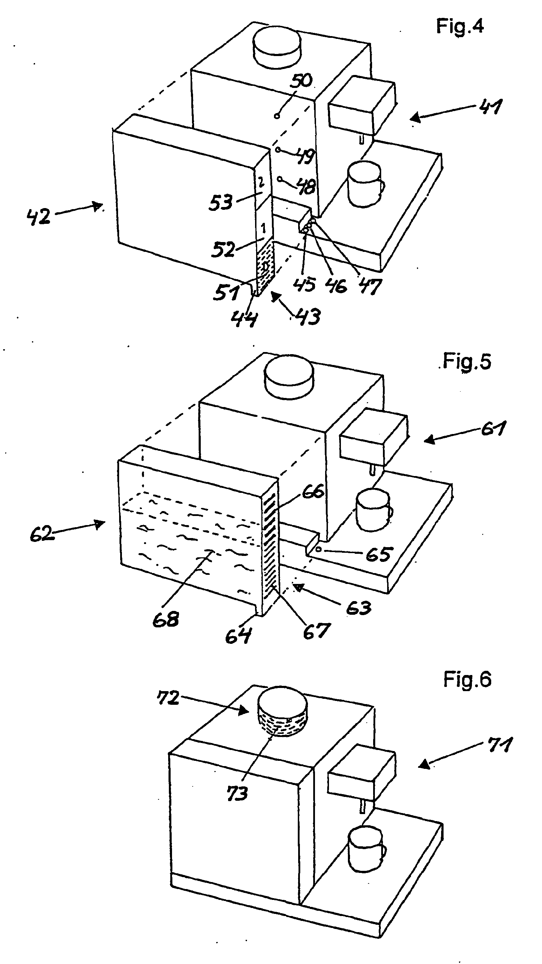

In den Ausführungsformen gemäß den Figuren 1 - 5 ist zur besseren Veranschaulichung jeweils ein Wasserbehälter 2, 12, 22, 42, 62 der Espressomaschine 1, 11, 21, 41, 61 von dieser losgelöst dargestellt. In der Ausführungsform nach Figur 6 ist der nicht bezeichnete Wasserbehälter an die Espressomaschine 71 angesetzt.

Gemäß Figur 1 ist einer Espressomaschine 1 ein Wasserbehälter 2 zugeordnet, der, wie der nicht bezeichnete Wasserbehälter in Figur 6, an die Espressomaschine 1 angesetzt werden kann. Er besteht aus einem lichtstreuenden, transparenten Acrylglas.

Von zwei einander gegenüberliegenden Seitenflächen des Wasserbehälters 1 ist eine Seitenfläche mit 3 bezeichnet. Aus der Seitenfläche 3 ist eine Lichteinkoppelkante 4 ausgeformt, der im angesetzten Zustand des Wasserbehälters 2 zwei parallel geschaltete Lichtquellen 6, 7, die auf der dem Wasserbehälter 2 zugewandten Seite der Espressomaschine angeordnet sind, so gegenüberstehen, dass von den Lichtquellen 6, 7 ausgehendes Licht in die Lichteinkoppelkante 4 eingekoppelt wird, wenn der Wasserbehälter an die Espressomaschine angesetzt ist.

Zu einer füllstandsabhängigen Steuerung der Lichtquellen 6, 7 ist in der dem Wasserbehälter 2 zugeordneten Seite der Espressomaschine 1 ein Füllstandssensor 5 angeordnet.

Die Anordnung des Füllstandssensors 5 und der mit ihm verbundenen elektrischen Schaltung, über welche die Lichtquellen 6, 7 von dem Füllstandsensor 5 gesteuert werden, ist so getroffen, dass die Lichtquellen 6, 7 durch den Füllstandssensor aktiviert leuchten, wenn der Füllstand des Wassers in dem Wasserbehälter 2 ein vorgegebenes Minimum unterschreitet, insbesondere der Wasserbehälter entleert ist.

In diesem Zustand des Wasserbehälters 1 leuchten die Seitenfläche 3 und die mit dieser lichtleitend verbundenen übrigen Flächen des Wasserbehälters 2 durch das in die Lichteinkoppelkante 4 eingekoppelte Licht von den Lichtquellen 6, 7. In Figur 1 ist der Wasserbehälter 2 im leuchtenden Zustand dargestellt, wenngleich er von der Espressomaschine 1 abgesetzt ist.

In Figur 1 ist auch ein Kaffeebohnenbehälter 8 erkennbar. Eine füllgut- bzw. kaffeebohnenfüllstandsabhängige Visualisierung ist weiter unten im Blick auf Figur 6 beschrieben, in der der Kaffeebohnenbehälter mit 72 bezeichnet ist.

In der zweiten Ausführungsform gemäß Figur 2 sind sowohl die Espressomaschine 11 als auch der Wasserbehälter 12 modifiziert.

Aus lichtstreuendern, transparenten Acrylglas besteht hier eine Frontwand 13. an der seitlich vertikal eine Lichteinkoppelkante 14 ausgebildet ist

Zur Einkopplung des Lichts in die Lichteinkoppelkante 14 sind auf der dem Wasserbehälter 12 zugewandten Seite der Espressomaschine 11 drei Lichtquellen 15, 16, 17 in einer vertikalen Reihe angeordnet und elektrisch parallel geschaltet. Ein Füllstandssensor 18 ist, wie in der Ausführungsform gemäß Figur 1, auf der dem Wasserbehälter 12 zugewandten Seite der Espressomaschine 11 angeordnet, um die Lichtquellen 15, 16, 17 füllstandsabhängig zu steuern und die Frontwand 13 durch das in sie eingekoppelte Licht von den Lichtquellen 15, 16, 17 leuchten zu lassen, wenn der mit dem Füllstandssensor erfasste Füllstand einen vorgegebenen Wert unterschreitet. Für diesen Fall ist die Frontwand 13 in Figur 2 als Leuchtfläche dargestellt.

Während in der zweiten Ausführungsform gemäß Figur 2 die Lichtquellen 15, 16, 17 elektrisch parallel geschaltet sind und zur gemeinsamen Aktivierung der leuchtenden Frontwand 13 von nur einem Füllstandssensor 18 gesteuert zu sein brauchen, unterscheidet sich die dritte Ausführungsform gemäß Figur 3 hiervon dadurch, dass den wie in Figur 2 vertikal in einer Reihe angeordneten Lichtquellen 25, 26, 27 jeweils ein Füllstandssensor 28, 29, 30 zugeordnet ist, wobei die Füllstandssensoren 28, 29, 30 ebenfalls vertikal übereinander auf einer einem Wasserbehälter 22 zugewandten Seite der Espressomaschine 21 angeordnet sind.

Ein weiterer Unterschied besteht darin, dass die Frontwand 23 des Wasserbehälters 22 in drei übereinander angeordnete Leuchtabschnitte 31, 32 und 33 aufgeteilt Ist, die lichtleittechnisch voneinander isoliert sind. Aus jedem der Leuchtabschnitte ist eine individuelle Lichteinkoppelkante ausgeformt, die jeweils von den anderen Lichteinkoppelkanten getrennt ist In Figur 3 ist nur die Lichteinkoppelkante 24 erkennbar.

Die Füllstandssensoren 28, 29, 30, die Lichtquellen 25, 26, 27 und die Lichteinkoppelkanten, insbesondere 24, sind den Leuchtabschnitten 31, 32, 33 so zugeordnet, dass der Leuchtabschnitt 33 von der Lichtquelle 27 zum Leuchten gebracht wird, wenn der Sensor 30 einen vollen Wasserbehälter erfasst, der Leuchtabschnitt 32 zum Leuchten aktiviert wird, wenn der Füllstandssensor 29 einen halbvollen Wasserbehälter 22 erfasst, und der Leuchtabschnitt 31 zum Leuchten aktiviert wird, wenn der Füllstandssensor 28 einen leeren Wasserbehälter 22 erfasst.

Wie dargestellt können die Leuchtabschnitte 31, 32, 33 zusätzlich mit Ziffern versehen sein, welche die genannten Füllzustände des Wasserbehälters 22 bezeichnen.

Die Ausführungsform der Erfindung nach Figur 4, in der eine Espressomaschine mit 41 bezeichnet ist und ein Wasserbehälter mit 42, weist eine ähnliche Anordnung von Leuchtabschnitten 51, 52, 53, wie diejenige der Leuchtabschnitte 31, 32, 33 in Figur 3 auf, wobei jedoch die Leuchtabschnitte 51, 52, 53 drei elektrisch voneinander isolierte OLED-Flächen sind, die als dünnfilmige Leuchtdioden auf der Frontwand 43 des Wasserbehälters 42 aufgebracht sind.

Die Leuchtabschnitte 51, 52, 53 sind über eine Kontaktleiste 44 mit Stromeinspeisekontakten 45, 46, 47 kontaktiert, wenn der Wasserbehälter 42 an die Espressomaschine 41 angesetzt ist. Der Strom bzw. die Spannung an den Stromeinspeisekontakten 45, 46, 47 wird durch den Stromeinspeisekontakten 45, 46, 47 einzeln zugeordnete Füllstandssensoren 48, 49, 50 gesteuert, und zwar entsprechend dem von den Füllstandssensoren 48, 49, 50 erfassten Füllstand in dem Wasserbehälter 42.

Demgemäß wird der Leuchtabschnitt 53 von dem Füllstandssensor 50 aktiviert, d.h. durch den von dem Füllstandssensor 50 gesteuerten Strom bei vollem Wasserbehälter 42 über den Stromeinspeisekontakt 47 zum Leuchten angeregt. Der Leuchtabschnitt 52 wird von dem Füllstandssensor 49, der einen halbvollen Wasserbehälter 42 erfasst, über den Stromeinspeisekontakt 46 zum Leuchten angeregt. Oder der Leuchtabschnitt 51 wird von dem Füllstandssensor 48, der einen leeren Wasserbehälter 42 erfasst, über den Stromeinspeisekontakt 45 aktiviert, d.h. zum Leuchten angeregt. In der in Figur 4 dargestellten Situation leuchtet der letztgenannte Leuchtabschnitt 51. Auch hier können die Leuchtabschnitte 51, 52, 53 alphanumerische Zeichen zur zusätzlichen Kennzeichnung der visualisierten Füllstände aufweisen.

Die in Figur 5 schematisch dargestellte Espressomaschine 61 mit einem zugehörigen Wasserbehälter 62 stellt hingegen ein Ausführungsbeispiel der Füllstandsvisualisierung des Wasserbehälters dar, die mit einer einzigen, nicht füllstandsabhängig gesteuerten Lichtquelle 65, die somit nach Einschalten der Espressomaschine 61 ständig leuchten kann, auskommt. Zur Füllstandsvisualisierung weist die Frontwand 63 eine Lichteinkoppelkante 64 auf, die im zusammengefügten Zustand des Wasserbehälters 62 mit der Espressomaschine 61 das von der Lichtquelle 65 eingestrahlte Licht in die Frontwand 63 eingleitet, womit die Frontwand 63 ständig durchleuchtet wird. Auf der Innenseite der Frontwand 63 ist aus dieser eine Skala 66 ausgeformt, und zwar so, dass der von Wasser 68 geflutete Skalenabschnitt 67, d.h. die ausgeformten Markierungen dieses Skalenabschnitts nicht leuchten bzw. leuchtend hervorgehoben sind. Leuchtend hervorgehoben sind hingegen die Markierungen des nicht gefluteten Skalenabschnitts wie in Fig. 5 angedeutet. Letzteres beruht darauf, dass die Brechkraft der Luft an diesem Skalenabschnitt signifikant geringer als diejenige des Materials ist, aus dem die Frontwand 63 besteht, wogegen das Wasser eine ähnliche Brechkraft aufweist.

Es bedarf also zu dieser Füllstandsvisualisierung keiner elektrischen Steuerung, die abhängig von einem Füllstandssensor gesteuert wird.

Während die Ausführungsformen nach den Figuren 1-5 eine Füllstandsvisualisierung des Wasserbehälters realisieren, ist in der Ausführungsform nach Figur 6 eine Füllstandsvisualisierung des Kaffeebohnenbehälters angedeutet, der in der schematisch dargestellten Espressomaschine 71 mit 72 bezeichnet ist.

Die Art des hierzu verwendeten Füllstandssensors ist an die Eigenschaften des überwachten Zubereitungsguts, hier Kaffeebohnen, angepasst.

### Bezugszahlenliste

- 1: Espressomaschine
- 2: Wasserbehälter
- 3: Seitenwand
- 4: Lichteinkoppelkante
- 5: Füllstandssensor
- 6: Lichtquelle
- 7: Lichtquelle
- 8: Kaffeebohnenbehälter
- 9: ------
- 10: ------
- 11: Espressomaschine
- 12: Wasserbehälter
- 13: Frontwand
- 14: Lichteinkoppelkante
- 15: Lichtquelle
- 16: Lichtquelle
- 17: Lichtquelle
- 18: Füllstandssensor
- 19: ------
- 20: ------
- 21: Espressomaschine
- 22: Wasserbehälter
- 23: Frontwand
- 24: Lichteinkoppelkante
- 25: Lichtquelle
- 26: Lichtquelle
- 27: Lichtquelle
- 28: Füllstandssensor
- 29: Füllstandssensor
- 30: Füllstandssensor
- 31: Leuchtabschnitt
- 32: Leuchtabschnitt
- 33: Leuchtabschnitt
- 34: ------
- 35: ------
- 36: ------
- 37: ------
- 38: ------
- 39: ------
- 40: ------
- 41: Espressomaschine
- 42: Wasserbehälter
- 43: Frontwand
- 44: Kontaktleiste
- 45: Stromeinspeisekontakt
- 46: Stromeinspeisekontakt
- 47: Stromeinspeisekontakt
- 48: Füllstandssensor
- 49: Füllstandssensor
- 50: Füllstandssensor
- 51: Leuchtabschnitt (OLED-Fläche)
- 52: Leuchtabschnitt (OLED-Fläche)
- 53: Leuchtabschnitt (OLED-Fläche)
- 54: ------
- 55: ------
- 56: ------
- 57: ------
- 58: ------
- 59: ------
- 60: ------
- 61: Espressomaschine
- 62: Wasserbehälter
- 63: Frontwand
- 64: Lichteinkoppelkante
- 65: Lichtquelle
- 66: Skala
- 67: Skalenabschnitt (nicht leuchtend)
- 68: Wasser
- 69: ------
- 70: ------
- 71: Espressomaschine
- 72: Kaffeebohnenbehälter
- 73: Umfangswand

## Patentansprüche

1. Kaffeezubereitungsgerät mit wenigstens einem Zubereitungsguibehätter (42), der wenigstens eine Behälterwand (43), insbesondere auf einer Behälterfrontseite, mit einer Füllstandsanzeige aufweist,
wobei die wenigstens eine Behälterwand (43) als Füllstandsanzeige mindestens einen füllstandsabhängig aktivierbaren Leuchtabschnitt (51, 52, 53) aufweist,
wobei der mindestens eine Leuchtabschnitt (51, 52, 53) von je einem benachbart zu dem, an dem oder in dem Zubereitungsgutbehälter (42) angeordneten Füllstandssensor (48, 49, 50) aktivierbar ist,
**dadurch gekennzeichnet,**
**dass** der mindestens eine Leuchtabschnitt (51, 52, 53) auf der wenigstens einen Behälterwand (43) als eine dünnfilmige Leuchtdiode aus einem organischen, halbleitenden Material (OLED) ausgebildet ist und mit jeweils einer von dem Füllstandssensor (48, 49, 50) gesteuerten Spannung beaufschlagt ist.

2. Kaffeezubereitungsgerät nach Anspruch 1,
**dadurch gekennzeichnet,**
**dass** die Frontseite des Zubereitungsgutbehälters (42) drei gegeneinander versetzt übereinander angeordnete, voneinander elektrisch isolierte OLED-Flächen (51, 52, 53) aufweist.

3. Kaffeezubereitungsgerät nach Anspruch 1 oder 2,
**dadurch gekennzeichnet,**
**dass** jede der OLED-Flächen (51, 52, 53) mit wenigstens einem an dem Zubereitungsgutbehälter angeordneten Kontakt verbunden ist, der mit je einem gerätefesten Stromeinspeisekontakt (45, 46, 47) kontaktierbar ist, und
**dass** an jeweils einem der Stromeinspeisekontakte (45, 46, 47) füllstandsabhängig eine durch den zugeordneten Füllstandssensor (48, 49, 50) gesteuerte Spannung anliegt.

4. Kaffeezubereitungsgerät nach Anspruch 3,
**dadurch gekennzeichnet,**
**dass** die an dem Zubereitungsgutbehälter (42) angeordneten Kontakte in einer auf die Stromeinspeisekontakte (45, 46, 47) aufschiebbaren Steckerleiste (44) angeordnet sind.

5. Kaffeezubereitungsgerät nach den Ansprüchen 2-4,
**dadurch gekennzeichnet,**
**dass** jeweils die Spannung an einer der OLED-Flächen (51, 52, 53) von je einem der OLED-Fläche zugeordneten Füllstandssensor (48, 49, 50) gesteuert wird,
**dass** damit eine oberste OLED-Fläche (53) von dem Füllstandssensor (50) aktivierbar ist, der einen vollen Zustand des Zubereitungsgutbehälters (42) erfasst, eine mittlere OLED-Fläche (52) von dem Füllstandssensor (49) aktivierbar ist, der einen halbvollen Zustand des Zubereitungsgutbehälters (42) erfasst, und eine untere OLED-Fläche (51) von dem Füllstandssensor (48) aktivierbar ist, der einen Leerzustand des Zubereitungsgutbehälters (42) erfasst.

6. Kaffeezubereitungsgerät nach Anspruch 1,
**dadurch gekennzeichnet,**
**dass** der mindestens eine Leuchtabschnitt als OLED-Fläche mit einer Skala ausgebildet ist, die von mindestens einem Füllstandssensor gesteuert analog zum Füllstand anregbar ist.

7. Kaffeezubereitungsgerät nach einem der vorangehenden Ansprüche,
**dadurch gekennzeichnet,**
**dass** der Zubereitungsgutbehälter ein Wasserbehälter (42) ist.

8. Kaffeezubereitungsgerät nach einem der Ansprüche 1-6,
**dadurch gekennzeichnet,**
**dass** der Zubereitungsgutbehälter ein Kaffeebohnenbehälter (8, 72) ist.

## Claims

1. Coffee preparation device with at least one preparation material container (42) comprising at least one container wall (43), especially on a container front side, with a fill level display,
wherein the at least one container wall (43) includes as the fill level display at least one fill level dependently activable luminous section (51, 52, 53),
wherein the at least one luminous section (51, 52, 53) is activable by a fill level sensor (48, 49, 50) each disposed adjacent to, on, or within, the preparation material container (42),
**characterized in**
**that** the at least one luminous section (51, 52, 53) on the at least one container wall (43) is designed as a thin-film luminous diode of an organic semiconductive material (OLED) to which a voltage controlled by the fill level sensor is applied (48, 49, 50).

2. Coffee preparation device according to claim 1,
**characterized in**
**that** the front side of the preparation material container (42) comprises three OLED faces (51, 52, 53) arranged one upon the other and staggered relative to each other and electrically insulated from each other.

3. Coffee preparation device according to claim 1 or 2,
**characterized in**
**that** each of the OLED faces (51, 52, 53) is connected with at least one contact disposed on the preparation material container, which is contactable with one stationary current feeder contact (45, 46, 47) each, and that to each one of the current feeder contacts (45, 46, 47) a voltage is applied which is filling level dependently controlled by the associated fill level sensor (48, 49, 50).

4. Coffee preparation device according to claim 3,
**characterized in**
**that** the contacts provided on the preparation material container (42) are arranged on a plug board (44) shiftable onto the current feeder contacts (45, 46, 47).

5. Coffee preparation device according to claims 2 through 4,
**characterized in**
**that** in each case, the voltage on one of the OLED faces (52, 52, 53) is controlled by one of the fill level sensors (48, 49, 50) assigned to each OLED face,
**that**, thereby, an uppermost OLED face (53) is activable by the fill level sensor (50) which records a full state of the preparation material container (42), a middle OLED face (52) is activable by the fill level sensor (49) which gathers a half-full state of the preparation material container (42), and a lower OLED face (51) is activable by the fill level sensor (48) which gathers an empty state of the preparation material container (42).

6. Coffee preparation device according to claim 1,
**characterized in**
**that** the at least one luminous section is designed as an OLED face with a scale which is excitable by at least one fill level sensor controlled analogously to the fill level.

7. Coffee preparation device according to one of the foregoing claims,
**characterized in**
**that** the preparation material container is a water container (42).

8. Coffee preparation device according to one of claims 1 through 6,
**characterized in**
**that** the preparation material container is a coffee bean container (8, 72).

## Revendications

1. Appareil pour la préparation du café comprenant au moins un récipient de produit de préparation (42) présentant au moins une paroi de récipient (43), en particulier sur le côté avant du récipient, qui porte un affichage du niveau de remplissage, dans lequel la paroi de récipient (43), au moins au nombre de une, présente, en qualité d'affichage du niveau de remplissage, au moins une zone lumineuse (51, 52, 53) qui peut être activée en fonction du niveau de remplissage, et dans lequel la zone lumineuse (51, 52, 53), au moins au nombre de une, peut être activée par un capteur de niveau de remplissage (48, 49, 50) disposé à proximité du récipient de produit de préparation (42), ou encore appliqué sur ou placé dans ce récipient, **caractérisé en ce que** la zone lumineuse (51, 52, 53), au moins au nombre de une, portée par la paroi du récipient (43), au moins au nombre de une, est constituée par une diode électroluminescente à film mince, composée d'une matière semi-conductrice organique (OLED), et est excitée par une tension commandée par le capteur du niveau de remplissage (48, 49, 50) correspondant.

2. Appareil pour la préparation du café selon la revendication 1, **caractérisé en ce que** le côté avant du récipient de produit de préparation (42) présente trois surfaces OLED (51, 52, 53), disposées avec décalage l'une au-dessus de l'autre, et isolées électriquement l'une de l'autre.

3. Appareil pour la préparation de café selon la revendication 1 ou 2, **caractérisé en ce que** chacune des surfaces OLED (51, 52, 53) est connectée à au moins un contact porté par le récipient de produit de préparation, qui peut être mis en contact avec un contact d'alimentation en courant porté par l'appareil (45, 46, 47), et **en ce qu'**à chacun des contacts d'alimentation en courant (45, 46, 47) est appliquée, en fonction du niveau de remplissage, une tension commandée par le capteur de niveau de remplissage correspondant (48, 49, 50).

4. Appareil pour la préparation du café selon la revendication 3, **caractérisé en ce que** les contacts prévus sur le récipient de produit de préparation (42) sont agencés dans un connecteur multipoint (44) qui peut être enfiché sur les contacts d'alimentation en courant (45, 46, 47).

5. Appareil pour la préparation du café selon les revendications 2 à 4, **caractérisé en ce que** la tension appliquée à chacune des surfaces OLED (51, 52, 53) est commandée par le capteur du niveau de remplissage (48, 49, 50) associé à la surface OLED correspondante, **en ce que**, de cette façon, une surface OLED extrême supérieure (53) peut être activée par le capteur du niveau de remplissage (50) qui capte un état plein du récipient de produit de préparation (42), une surface OLED centrale (52) peut être activée par le capteur du niveau de remplissage (49) qui capte un état à moitié plein du récipient de produit de préparation (42), et une surface OLED inférieure (51) peut être activée par le capteur du niveau de remplissage (48) qui capte un niveau vide du récipient de produit de préparation (42).

6. Appareil pour la préparation du café selon la revendication 1, **caractérisé en ce que** la zone lumineuse, au moins au nombre de une, est constituée par une surface OLED présentant une graduation qui peut être excitée par au moins un capteur du niveau de remplissage commandé en fonction du niveau de remplissage.

7. Appareil pour la préparation du café selon l'une des revendications précédentes, **caractérisé en ce que** le récipient de produit de préparation est un réservoir d'eau (42).

8. Appareil pour la préparation du café selon l'une des revendications 1 à 6, **caractérisé en ce que** le récipient de produit de préparation est un récipient de grains de café (8, 72).
